# EUROPEAN PATENT APPLICATION

(11) **EP 4 653 772 A1**
(43) Date of publication of application: **26.11.2025**
(21) Application number: 25175887.6
(22) Date of filing: 13.05.2025
(51) Int. Cl.: F24F 1/0047, F24F 13/22

(54) **INDOOR UNIT OF AIR CONDITIONER**

(30) Priority: 24.05.2024 JP 2024084919
(71) Applicant: Carrier Japan Corporation, Tokyo (JP)
(72) Inventor: Hamasaki, Motoki, Shizuoka (JP); Ozawa, Tetsuro, Shizuoka (JP)
(74) Representative: Gramm, Lins & Partner Patent- und Rechtsanwälte PartGmbB

(57) **Abstract**

An indoor unit of an air conditioner according to an embodiment includes: a body that is attachable to a ceiling of a room to be air-conditioned; a heat exchanger housed in the body; a drain pan configured to accumulate drain water generated due to heat exchange performed by the heat exchanger; a drain pump configured to pump up the drain water accumulated in the drain pan; a drain hose configured to drain, to an outside of the body, the drain water discharged by the drain pump; a sterilizing unit configured to sterilize the drain water; and a control unit configured to perform an output control for the drain pump such that an output from the drain pump is reduced in a stepwise manner from a point at which the drain pump is driven toward a point at which the drain pump is stopped.

## Description

### TECHNICAL FIELD

An embodiment of the present invention relates to an indoor unit of an air conditioner.

### BACKGROUND ART

There is a known indoor unit of an air conditioner, the indoor unit including an indoor unit body, a heat exchanger, a drain pan, a drain pump, and a semi-rigid drain hose having a bellows shape, the indoor unit body being attached to the ceiling of a room to be air-conditioned, the heat exchanger being housed in the indoor unit body, the drain pan accumulating drain water generated due to a heat exchanging action of the heat exchanger, the drain pump pumping up the drain water, which is accumulated in the drain pan, in order to guide the drain water to a drainage system, the drain hose guiding the drain water discharged by the drain pump to the outside of the indoor unit body.

There is also a known indoor unit of an air conditioner, the indoor unit having a configuration in which when a drain pump is stopped, drain water that is present in a drain hose, the drain pump, and the like flows back due to its own weight, and when the drain water flows out to a drain pan from the suction port of the drain pump in a stopped state, the drain water comes into contact with an antibacterial agent for sterilization.

### PRIOR ART DOCUMENTS

### PATENT DOCUMENT

Patent Document 1: Japanese Patent Laid-Open No. 2009-257622
Patent Document 2: Japanese Patent Laid-Open No. 2017-122526

### SUMMARY OF THE INVENTION

### PROBLEMS TO BE SOLVED BY THE INVENTION

In the indoor unit of the conventional air conditioner, when the drain pump is stopped, the antibacterial agent comes into contact with the drain water flowing out from the suction port of the drain pump, in order to sterilize the drain water. However, there is a possibility that drain water flows out from the suction port of the drain pump at a high speed and hence, a sufficient sterilizing effect cannot be applied to the drain water.

The present invention has been made in view of the above, and it is an object of the present invention to provide an indoor unit of an air conditioner that can increase a sterilizing effect on drain water.

### MEANS FOR SOLVING THE PROBLEMS

An indoor unit of an air conditioner according to an embodiment includes: a body that is attachable to a ceiling of a room to be air-conditioned; a heat exchanger housed in the body; a drain pan configured to accumulate drain water generated due to heat exchange performed by the heat exchanger; a drain pump configured to pump up the drain water accumulated in the drain pan; a drain hose configured to drain, to an outside of the body, the drain water discharged by the drain pump; a sterilizing unit configured to sterilize the drain water; and a control unit configured to perform an output control for the drain pump such that an output from the drain pump is reduced in a stepwise manner from a point at which the drain pump is driven toward a point at which the drain pump is stopped.

In the indoor unit, it is preferable that the sterilizing unit is disposed at a position that allows the sterilizing unit to irradiate a whole or a portion of a lower region with a sterilizing substance in order to sterilize drain water in the whole or the portion of the lower region, the lower region being located below a suction port of the drain pump. Furthermore, in the indoor unit, it is preferable that the sterilizing unit is a device configured to irradiate the drain water accumulated in the drain pan with ultraviolet light as the sterilizing substance.

### BRIEF DESCRIPTION OF THE DRAWINGS

FIG. 1 is a perspective view of an indoor unit of an air conditioner according to an embodiment of the present invention.
FIG. 2 is a plan view of the indoor unit of the air conditioner according to the embodiment of the present invention.
FIG. 3 is a front view of the indoor unit of the air conditioner according to the embodiment of the present invention.
FIG. 4 is an enlarged view of a front left inclined plate of the indoor unit of the air conditioner according to the present embodiment.
FIG. 5 is a schematic view showing a drain pump and an area around the drain pump in an enlarged manner as viewed from the side, and a control unit, the drain pump being provided to the indoor unit of the air conditioner according to the present embodiment.
FIG. 6 is a flowchart showing a portion of the action of the indoor unit of the air conditioner according to the present embodiment.
FIG. 7 is a flowchart showing another portion of the action of the indoor unit of the air conditioner according to the present embodiment.
FIG. 8 is a diagram for describing a first sterilizing method for drain water accumulated in the drain pump provided to the indoor unit of the air conditioner according to the present embodiment.
FIG. 9 is a diagram for describing a second sterilizing method for drain water accumulated in the drain pump provided to the indoor unit of the air conditioner according to the present embodiment.

### DESCRIPTION OF EMBODIMENTS

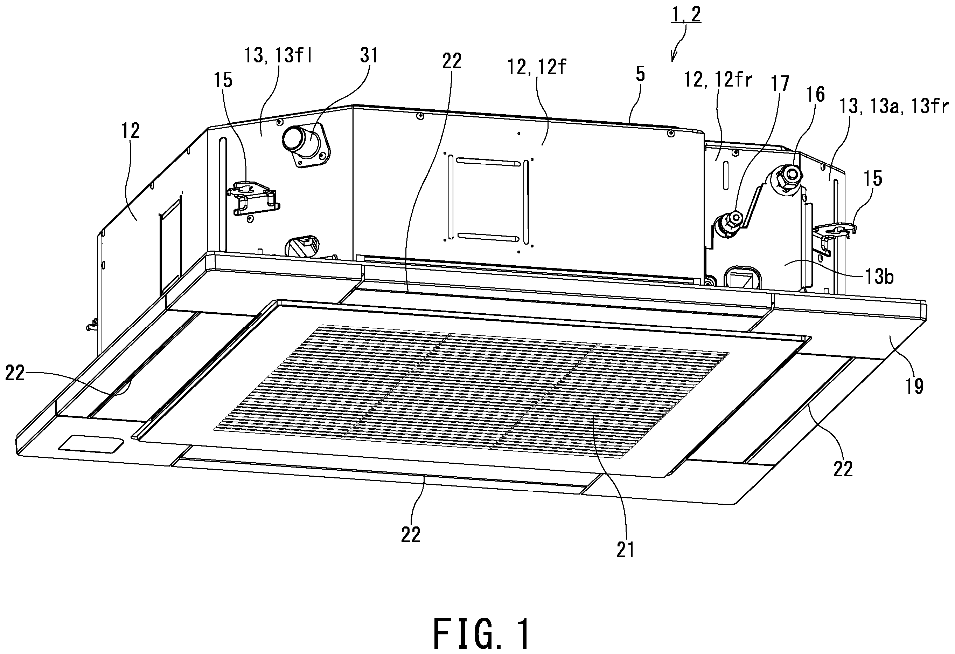

An embodiment of an indoor unit of an air conditioner according to the present invention will be described with reference to FIG. 1 to FIG. 9. In a plurality of drawings, identical or corresponding components are given the same reference symbols.

FIG. 1 is a perspective view of an indoor unit of the air conditioner according to the embodiment of the present invention.

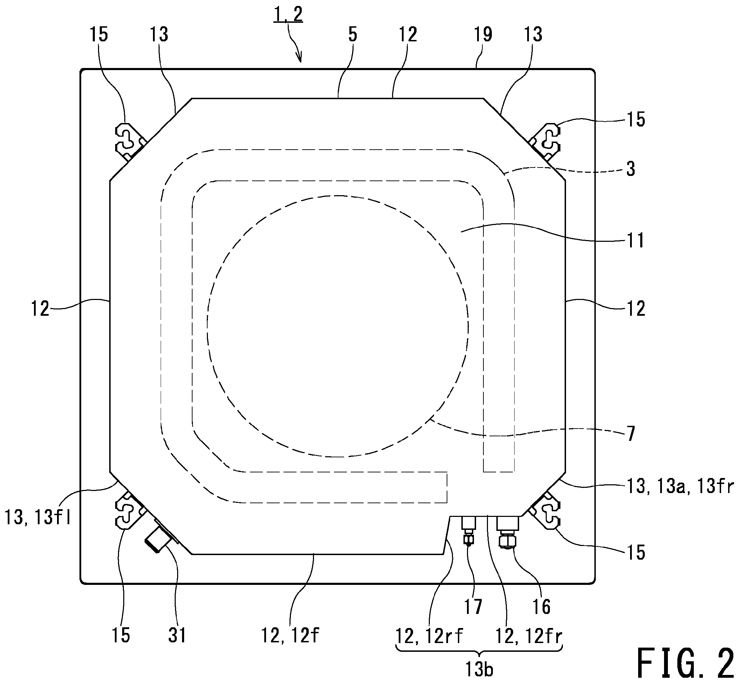

FIG. 2 is a plan view of the indoor unit of the air conditioner according to the embodiment of the present invention.

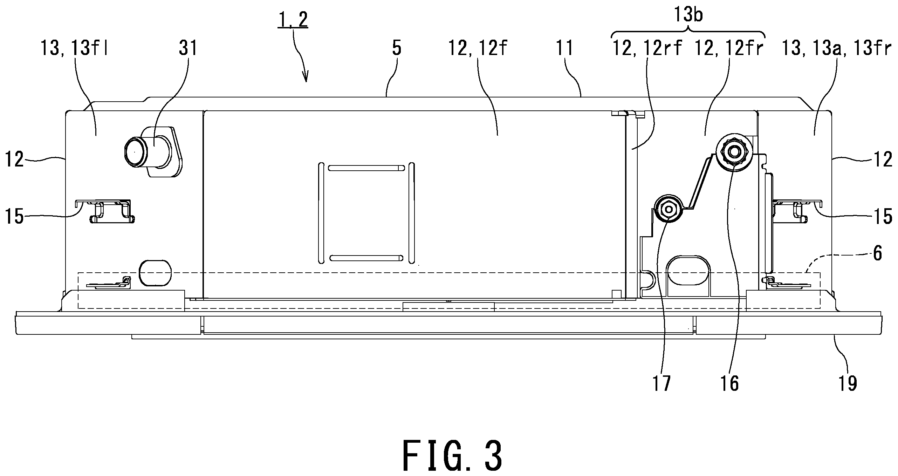

FIG. 3 is a front view of the indoor unit of the air conditioner according to the embodiment of the present invention.

An air conditioner 1 according to the present embodiment includes an outdoor unit and an indoor unit 2 shown in FIG. 1, the outdoor unit being installed outdoors on the heat source side, the indoor unit 2 being installed indoors on the user side.

The air conditioner 1 also includes a refrigeration cycle. The refrigeration cycle includes a heat-source-side heat exchanger, a compressor, a user-side heat exchanger 3, an expander, and refrigerant pipes that cause refrigerant to flow into these pieces of equipment. The air conditioner 1 may include a four-way valve that switches between a cooling operation and a heating operation of the air conditioner 1 by switching the flow direction of refrigerant in the refrigerant pipes.

The indoor unit 2 houses the user-side heat exchanger 3 of the refrigeration cycle. The outdoor unit houses the heat-source-side heat exchanger, the compressor, and the four-way valve of the refrigeration cycle. An electric expansion valve being the expander may be housed in the indoor unit 2, or may be housed in the outdoor unit. The outdoor unit and the indoor unit are connected to each other via a crossover pipe. The crossover pipe constitutes a portion of the refrigerant pipe. The air conditioner 1 causes refrigerant to circulate between the heat exchanger in the outdoor unit and the heat exchanger 3 in the indoor unit 2 to condition indoor air.

A place where the indoor unit 2 is installed, that is, a room to be air-conditioned, is a room in a building, for example. The indoor unit 2 is installed in a state of being embedded in a space above the ceiling of the room to be air-conditioned. That is, the indoor unit 2 is a so-called embedded indoor unit.

As shown in FIG. 1 to FIG. 3, the indoor unit 2 according to the present embodiment includes a housing 5, the heat exchanger 3, a blower 7, a drain pan 6, and a decorative panel 19, the housing 5 serving as a body, the heat exchanger 3 being provided in the housing 5, the blower 7 being provided in the housing 5, the drain pan 6 being provided in the housing 5 at a position below the heat exchanger 3, the decorative panel 19 covering the bottom surface of the housing 5. The blower 7 includes an annular bell mouth and a fan, the annular bell mouth being provided to the housing 5, the fan suctioning air through the bell mouth and blowing the air to the heat exchanger 3.

The housing 5 is a box body that includes a substantially-quadrangular top surface, four rectangular side surfaces, and an open bottom surface. The top surface of the housing 5 is closed by a top plate 11. The fan is provided to the lower surface of the top plate 11. The front surface, the right side surface, the left side surface, and the rear surface of the housing 5 are closed by side plates 12. Corner portions, each of which is formed between a pair of adjacent side surfaces of the housing 5, have no sharp corners and inclined, as if the corner portions are chamfered. The chamfered corner portions are closed by inclined plates 13. Each inclined plate 13 is inclined by 45 degrees relative to the adjacent side plates 12. In other words, the angle formed between the inclined plate 13 and the side plate 12, which are adjacent to each other, is 135 degrees.

The housing 5 also includes support metal fittings 15 provided to the respective inclined plates 13. The support metal fittings 15 are held by nuts to support the entire indoor unit 2, the nuts being fastened to stud bolts provided in such a way as to hang down in the space above the ceiling.

In FIG. 2, the lower side of the air conditioner 1 is taken as the front surface, and the upper side of the air conditioner 1 is taken as the rear surface. Further, the left side of the air conditioner 1 is taken as the left side surface, and the right side of the air conditioner 1 is taken as the right side surface. In FIG. 3, the lower side of the air conditioner 1 is taken as the bottom surface, and the upper side of the air conditioner 1 is taken as the top surface. Further, the left side of the air conditioner 1 is taken as the left side surface, and the right side of the air conditioner 1 is taken as the right side surface. The indoor unit 2 is installed with the top surface thereof directed upward, and the bottom surface thereof directed downward. Therefore, in the indoor unit 2, the vertical direction is the direction that passes through the top surface and the bottom surface. The upper side, the lower side, the front side, the rear side, the right side, and the left side of the indoor unit 2 agree with the sides in FIG. 2 and FIG. 3.

The chamfered corner portion between the front surface and the right side surface of the housing 5 includes an inclined portion 13a and a stepped portion 13b, the stepped portion 13b being offset toward the rear surface of the housing 5 when the housing 5 is viewed in a plan view.

The stepped portion 13b is closed by a front right side plate 12fr and a right front side plate 12rf. To be more specific, the front right side plate 12fr is disposed parallel to a side plate 12f on the front surface in such a way as to be offset from the side plate 12f on the front surface toward the rear surface, and faces the front surface of the housing 5. The right front side plate 12rf is disposed to couple the side plate 12f on the front surface to the front right side plate 12fr, which is offset from the side plate 12f on the front surface, and faces the right side surface of the housing 5. In the example shown in the drawing, the right front side plate 12rf is disposed in an inclined manner in such a way as to face the right side surface of the housing 5, and to face slightly toward the front surface side.

The inclined portion 13a is closed by a front right inclined plate 13fr. The front right inclined plate 13fr is disposed to couple the side plate 12 on the right side surface to the front right side plate 12fr of the stepped portion 13b.

Joint portions 16 and 17 are disposed on the front right side plate 12fr, the refrigerant pipes being connected to the joint portions 16 and 17. The joint portions 16 and 17 constitute portions of the refrigerant pipes that cause refrigerant to flow into the heat exchanger 3. The joint portions 16 and 17 couple the refrigerant pipes disposed outside the indoor unit 2 to the heat exchanger 3 disposed in the indoor unit 2. The joint portions 16 and 17 extend substantially straight in the direction toward the front surface of the housing 5 (hereinafter also referred to as "forward direction"), that is, in the direction parallel to the normal of the side plate 12f on the front surface, and in the direction along the normal of the front right side plate 12fr.

A portion of the room to be air-conditioned that faces the open bottom surface of the housing 5 is covered by the decorative panel 19. The decorative panel 19 includes a suction grille 21 and a plurality of air outlets 22, the suction grille 21 being disposed at the center of the decorative panel 19 to suction air from the room to be air-conditioned, the plurality of air outlets 22 being disposed along the outer edge portions of the decorative panel 19 to blow out air to the room to be air-conditioned. The suction grille 21 is disposed to overlap with the annular bell mouth provided at the center portion of the bottom surface of the housing 5, for example, and faces the suction opening of the housing 5. The plurality of air outlets 22 face a plurality of blowout openings of the housing 5. Each air outlet 22 is provided with a louver to adjust air flow direction.

The fan includes a fan motor and an impeller, the fan motor including a rotary shaft extending in the up-down direction at substantially the center of the housing 5, the impeller being integrally fixed to the rotary shaft. The fan motor drives the impeller to rotate. The fan motor is fixed to the inner surface of the top plate 11 of the housing 5 via a fixture. When the impeller is driven to rotate, the impeller suctions air in the room to be air-conditioned from the suction opening of the housing 5 through a suction port 21 of the decorative panel 19, and then radially blows out the air in directions intersecting with the rotary shaft. The blown-out air is caused to perform heat exchange with refrigerant flowing through the heat exchanger 3, is blown out from the plurality of blowout openings of the housing 5, and is then blown out to the room to be air-conditioned through the air outlets 22 of the decorative panel 19. The center line of rotation of the impeller aligns with the rotary shaft of the fan motor, and extends in the vertical direction in a state in which the indoor unit 2 is installed.

The heat exchanger 3 is fixed to the top plate 11 of the housing 5. In the present embodiment, the heat exchanger 3 is of a fin-and-tube type, for example, and includes a large number of fins and refrigerant tubes, the fins being arranged and made of an aluminum alloy, the refrigerant tubes penetrating through the fins.

The heat exchanger 3 is provided in the housing 5, and surrounds the radial outer side of the fan. The inner peripheral surface of the heat exchanger 3 faces the fan, and the outer peripheral surface of the heat exchanger 3 faces the inner surfaces of the side plates 12. The heat exchanger 3 includes flat plate portions and corner portions, the flat plate portions facing the respective side plates 12 of the housing 5, each corner portion coupling two adjacent flat plate portions. For example, four flat plate portions and three corner portions are provided.

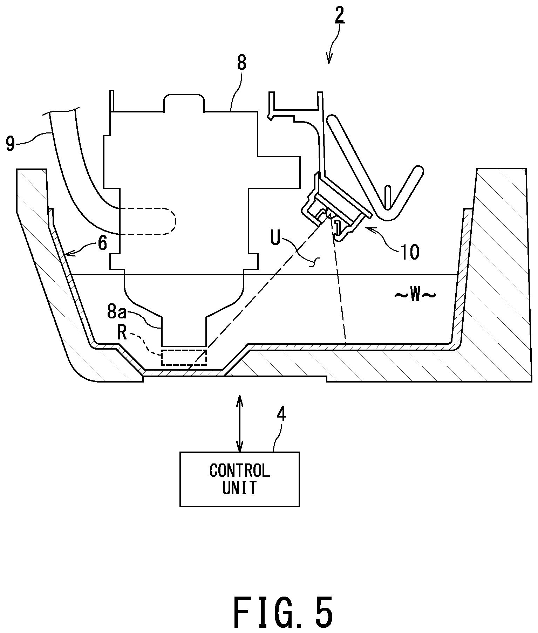

The drain pan 6 is disposed below the heat exchanger 3, and receives drain water generated due to heat exchange performed by the heat exchanger 3. During the cooling operation in which the heat exchanger 3 serves as an evaporator, moisture contained in air passing through the heat exchanger 3, that is, moisture in the room, is condensed on the surface of the heat exchanger 3, adheres to the heat exchanger 3 as drain water, and then drops from the heat exchanger 3. The drain pan 6 receives and accumulates the drain water dropping from the heat exchanger 3. The drain water accumulated in the drain pan 6 is pumped up by a drain pump 8 (shown in FIG. 5) provided in the housing 5, for example, and is then drained to the outside of the indoor unit 2 through a drain hose 9 (shown in FIG. 5).

In a plan view, the center of the heat exchanger 3 having a substantially annular shape, the center of rotation of the fan, the center of the suction port 21 of the decorative panel 19, and the center of the annular bell mouth substantially align with each other.

When the air conditioner 1 performs the cooling operation, the compressor in the outdoor unit discharges and sends high temperature and high pressure gas refrigerant to the outdoor heat exchanger (condenser). The outdoor heat exchanger performs heat exchange between outdoor air and the refrigerant flowing through the outdoor heat exchanger, thus condensing the refrigerant. The condensed liquid refrigerant is sent to the indoor unit 2 through the refrigerant pipe. In the indoor unit 2, the electric expansion valve expands the liquid refrigerant that flows into the indoor unit 2 from the refrigerant pipe, and low-temperature gas-liquid mixed refrigerant is sent to the heat exchanger 3 (evaporator). The heat exchanger 3 performs heat exchange between indoor air and low-temperature refrigerant flowing through the heat exchanger 3, thus gasifying the refrigerant. At this point of operation, the room is cooled by low-temperature air that is blown out from the indoor unit 2.

When the air conditioner 1 performs the heating operation, the compressor in the outdoor unit discharges and sends high temperature and high pressure gas refrigerant to the heat exchanger 3 (condenser) in the indoor unit 2. The heat exchanger 3 performs heat exchange between indoor air and the refrigerant flowing through the heat exchanger 3, thus condensing the refrigerant. At this point of operation, the room is heated by high-temperature air that is blown out from the indoor unit 2.

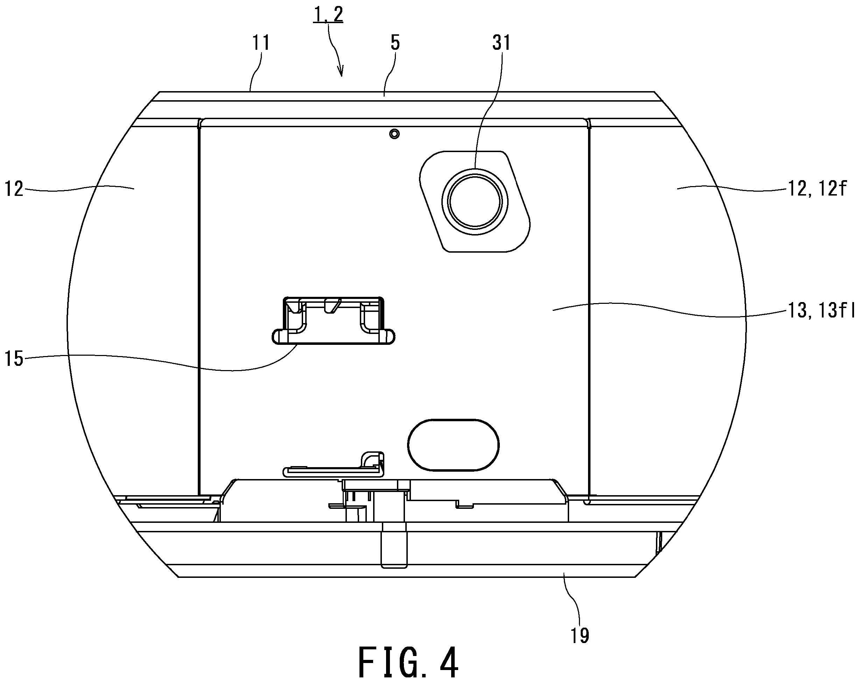

FIG. 4 is an enlarged view of a front left inclined plate of the indoor unit of the air conditioner according to the present embodiment.

As shown in FIG. 4, the housing 5 of the indoor unit 2 according to the present embodiment includes a drain socket 31 provided to a front left inclined plate 13fl.

The drain socket 31 substantially straightly extends along the normal of the front left inclined plate 13fl. Thus, the drain socket 31 protrudes in a direction inclined 45 degrees to the left relative to the front side of the housing 5. Accordingly, the protruding direction of the drain socket 31 is inclined relative to the extending direction of the joint portions 16 and 17. The drain socket 31 causes the inside of the housing 5 to communicate with the outside of the housing 5 in order to drain, to the outside of the housing 5, drain water accumulated in the housing 5 and pumped up by the drain pump, for example.

FIG. 5 is a schematic view showing the drain pump and an area around the drain pump in an enlarged manner as viewed from a side, and a control unit, the drain pump being provided to the indoor unit of the air conditioner according to the present embodiment. The water level of drain water W in FIG. 5 is a water level observed during a period in which an output control described later is performed (during a period in which drain water flows back from the drain pump 8).

As shown in FIG. 5, the indoor unit 2 according to the present embodiment includes a control unit 4, the drain pump 8, the drain hose 9, and a sterilizing unit 10, in addition to the drain pan 6. The control unit 4 controls the respective components of the air conditioner 1 based on content programmed in advance into the microcomputer of the control unit 4, and based on content set prior to the operation. The drain pan 6 accumulates drain water W generated due to heat exchange performed by the heat exchanger 3. The drain pump 8 pumps up the drain water W accumulated in the drain pan 6 from a suction port 8a provided at the lower portion of the drain pump 8. The drain hose 9 drains, to the outside of the housing 5, the drain water discharged by the drain pump 8 through the drain socket 31, and guides the drain water to a drain pipe (not shown in the drawing) installed in the space above the ceiling of the room to be air-conditioned.

The sterilizing unit 10 sterilizes the drain water W. For example, the sterilizing unit 10 is a sterilizing unit that performs irradiation with a sterilizing substance on the drain water W, and/or the sterilizing unit 10 is an antibacterial agent provided to the drain pan 6. Hereinafter, a description will be made for an example in which the sterilizing unit 10 is the sterilizing unit. The sterilizing unit 10 is disposed at a position that allows the sterilizing unit 10 to irradiate the whole or a portion of a lower region R with a sterilizing substance in order to sterilize the drain water W in the whole or the portion of the lower region R, the lower region R being located below the suction port 8a of the drain pump 8. FIG. 5 shows an irradiation region U for the sterilizing substance. It is preferable that the sterilizing unit 10 performs irradiation with the sterilizing substance on drain water in a wide range that includes the whole or a portion of the lower region R located below the suction port 8a of the drain pump 8, and a plurality of sterilizing units 10 may be provided. Examples of the sterilizing unit 10 include an ultraviolet irradiation device that generates and emits ultraviolet light (for example, deep ultraviolet light (UV-C)), an ozone emitting device that generates and emits ozone, a device including photocatalyst, and a device that also has such a sterilizing function.

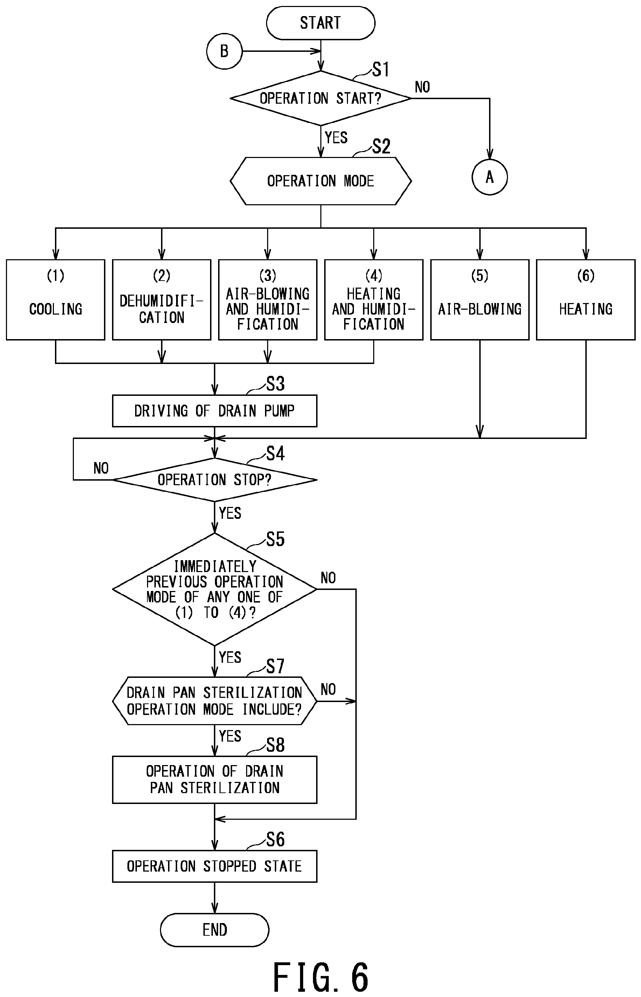

Next, the action of the indoor unit of the air conditioner according to the present embodiment will be described by using a flowchart shown in FIG. 6.

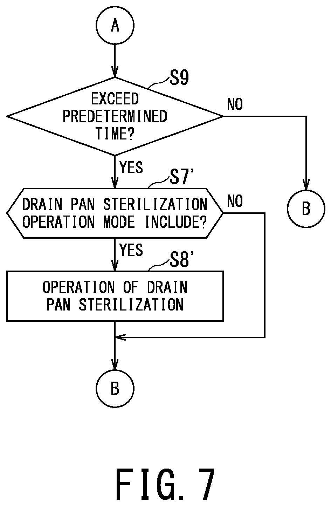

FIG. 6 and FIG. 7 are flowcharts showing the actions of the indoor unit of the air conditioner according to the present embodiment. In FIG. 6 and FIG. 7, reference symbols given as "S" and a numeral denote respective steps of the flowcharts.

The indoor unit 2 of the air conditioner 1 includes the control unit 4. The respective components of the air conditioner 1 are controlled based on content programmed in advance into the microcomputer of the control unit 4, and based on content set prior to the operation and hence, the indoor unit 2 of the air conditioner 1 is operated follows.

First, when power is supplied to a main power supply, the air conditioner 1 is brought into an operation stand-by state.

Next, the control unit 4 determines whether the operation start button of the air conditioner 1 is manipulated by the user (step S1). When it is determined that the operation start button is manipulated, the control unit 4 starts an air conditioning operation of the air conditioner 1.

When the user further selects a desired operation mode from (1) a cooling operation mode, (2) a dehumidification operation mode, (3) an air-blowing and humidification operation mode, (4) a heating and humidification operation mode, (5) an air-blowing operation mode, and (6) a heating operation mode, the air conditioner 1 is set to the desired operation mode (step S2). When the operation mode is any one of the above-mentioned operation modes (1) to (4) in step S2, the control unit 4 drives the drain pump 8 (step S3) to pump up drain water accumulated in the drain pan 6 from the suction port 8a. Then, the drain hose 9 drains, to the outside of the housing 5, the drain water discharged by the drain pump 8.

Next, the control unit 4 determines whether an operation time in any one of the above-mentioned operation modes (1) to (6) exceeds a predetermined time set in advance, and whether the operation stop button of the air conditioner 1 is manipulated by the user (step S4).

When it is determined in step S4 that the operation time exceeds the predetermined time set in advance, or the operation stop button is manipulated, the air conditioning operation of the air conditioner 1 is stopped. Then, the control unit 4 determines whether an immediately previous operation mode is any one of the above-mentioned operation modes (1) to (4) (step S5).

When it is determined in step S5 that the immediately previous operation mode is none of the above-mentioned operation modes (1) to (4), the control unit 4 performs an operation ending process, so that the air conditioner 1 is stopped, and is brought into a stopped state (step S6).

In contrast, when it is determined in step S5 that the immediately previous operation mode is any one of the above-mentioned operation modes (1) to (4), the control unit 4 determines whether a setting for an operation performed after the operation in the above-mentioned operation modes (1) to (4) set prior to the start of the operation includes a drain pan sterilization operation mode (step S7).

When it is determined in step S7 that the setting does not include the drain pan sterilization operation mode, the control unit 4 performs the operation ending process, so that the air conditioner 1 is stopped, and is brought into a stopped state (step S6).

In contrast, when it is determined in step S7 that the setting includes the drain pan sterilization operation mode, the control unit 4 performs an output control in which an output is reduced in a stepwise manner from the point at which the drain pump 8 is driven toward the point at which the drain pump 8 is stopped and, during this output control (during a first period in which drain water flows back), the control unit 4 controls the sterilizing unit 10 to perform irradiation with a sterilizing substance in order to sterilize the drain water (step S8).

The flow rate of drain water to be suctioned by the drain pump 8 is adjusted by the output control and hence, drain water that is present in the drain pipe disposed outside the housing 5, and drain water that is present in the drain hose 9 and the drain pump 8 disposed in the housing 5 slowly flows out to the lower region R from the suction port 8a of the drain pump 8. The drain water that flows out from the suction port 8a slowly joins with the drain water W in the drain pan 6. That is, the drain water that flows out from the suction port 8a slowly passes through the irradiation region U of the sterilizing unit 10.

When the drain pan sterilization operation in step S8 ends, the control unit 4 performs the operation ending process, so that the air conditioner 1 is stopped, and is brought into a stopped state (step S6). In the case of any one of the above-mentioned operation modes (1) to (4), in step S6, the drain pump 8 driven in step S3 is stopped to stop drainage of drain water to the outside of the housing 5.

On the other hand, when it is determined in step S1 that the operation start button is not manipulated (the process advances to "A" in FIG. 7), as shown in FIG. 7, the control unit 4 determines whether a stand-by time exceeds a predetermined time set in advance (step S9). When it is determined that the stand-by time exceeds the predetermined time set in advance, the control unit 4 determines whether the setting includes the drain pan sterilization operation mode (step S7').

When it is determined in step S7' that the setting does not include the drain pan sterilization operation mode (the process advances to "B" in FIG. 6), the control unit 4 does not perform anything, and advances to determination in step S1 again.

In contrast, when it is determined in step S7' that the setting includes the drain pan sterilization operation mode, the control unit 4 performs an output control in which an output is reduced in a stepwise manner from the point at which the drain pump 8 is driven toward the point at which the drain pump 8 is stopped and, during such an output control (during the first period in which drain water flows back), the control unit 4 controls the sterilizing unit 10 to perform irradiation with a sterilizing substance in order to sterilize the drain water (step S8'). Unlike step S8 (shown in FIG. 6), the output control in step S8', in which an output is reduced in a stepwise manner, does not depend on the kind (1) to (6) of the immediately previous operation mode.

When the drain pan sterilization operation in step S8' ends (the process advances to "B" in FIG. 6), the control unit 4 advances to the determination in step S1 again.

Also when it is not determined in step S9 that the stand-by time exceeds the predetermined time set in advance (the process advances to "B" in FIG. 6), the control unit 4 advances to determination in step S1 again.

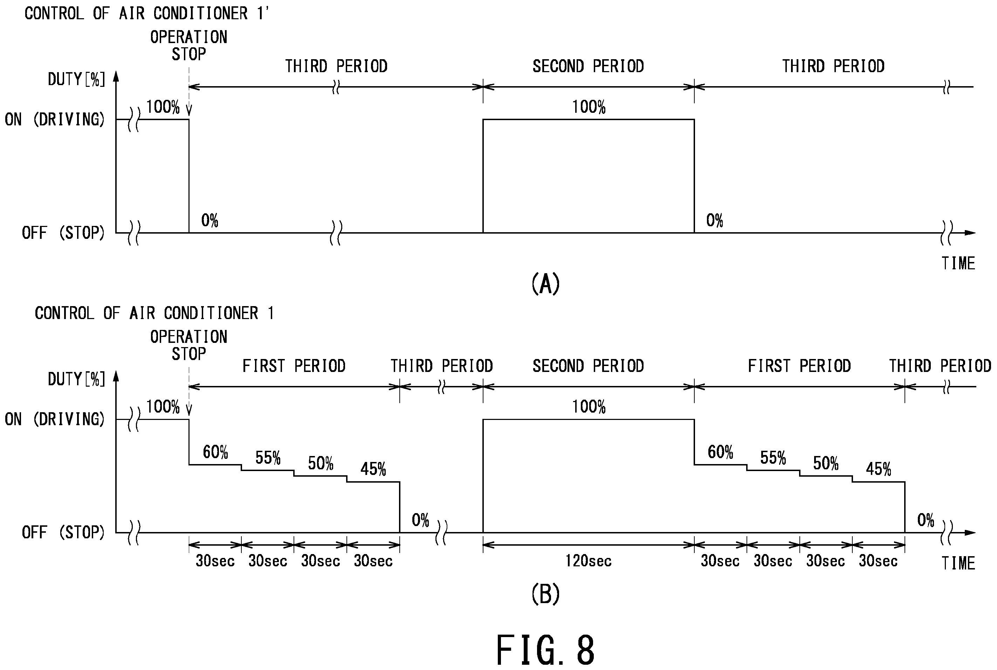

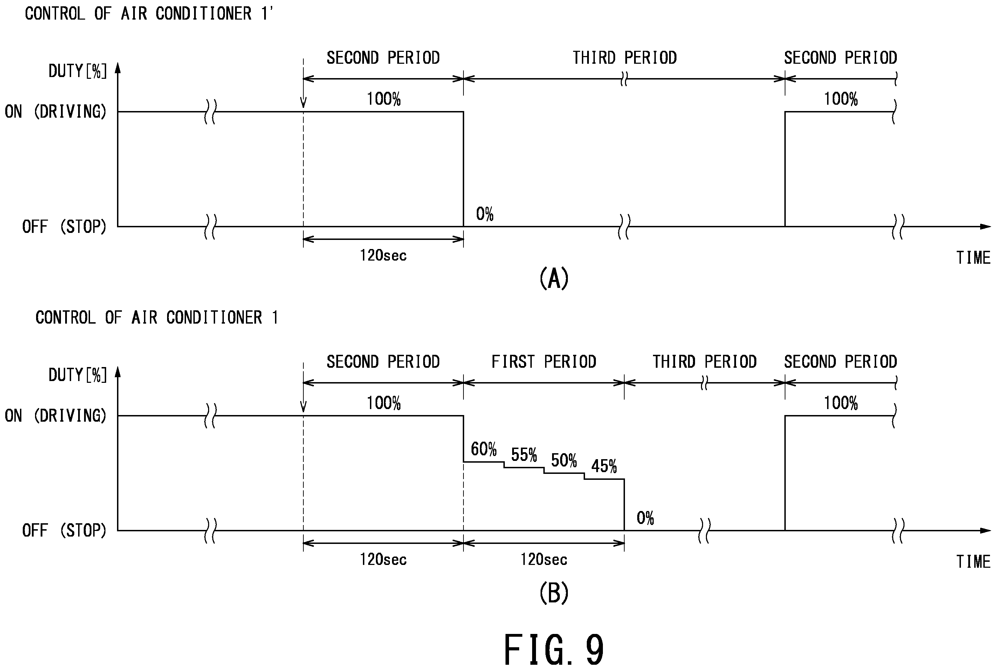

The action of the drain pump 8 in step S8 (and likewise step S8') will be described with reference to FIG. 8, and FIG. 9. FIG. 8 is a diagram for describing a first sterilizing method for drain water accumulated in the drain pump provided to the indoor unit of the air conditioner according to the present embodiment. FIG. 9 is a diagram for describing a second sterilizing method for drain water accumulated in the drain pump provided to the indoor unit of the air conditioner according to the present embodiment. Division (A) of FIG. 8 and division (A) of FIG. 9 are diagrams showing the actions of the drain pump according to a comparison example. Division (B) of FIG. 8 and division (B) of FIG. 9 are diagrams showing the actions of the drain pump 8 according to the present embodiment.

In the indoor unit of an air conditioner according to the comparison example (hereinafter referred to as "air conditioner 1'"), a control unit performs an ON/OFF control of the drain pump 8 as shown in division (A) of FIG. 8. In the air conditioner 1', after an operation stop instruction is issued, when the above-mentioned immediately previous mode is any one of the operation modes (1) to (4), the control unit 4' starts the drain pan sterilization operation. In the air conditioner 1', after the operation stop instruction is issued for the air conditioner 1', when the drain pump 8 is switched from an on state to an off state, drain water that is present in the drain hose 9, the drain pump 8, and the like flows back due to its own weight, and flows out to the drain pan 6 from the suction port 8a of the drain pump 8. At this point of operation, the drain water that flows out from the suction port 8a of the drain pump 8 in a stopped state is irradiated with a sterilizing substance for sterilization.

After the period in which the drain pump 8 is stopped (third period), the period in which the drain pump 8 is in an on state (second period) is provided again and, thereafter, the drain pump 8 is brought into an off state. With such operations, drain water accumulated in the drain pan 6 of the air conditioner 1' is agitated to sterilize the drain pan 6.

However, with such a configuration, when the drain pump 8 is switched to an off state, drain water flows out from the lower portion of the drain pump 8 at a high speed and hence, irradiation in one pass cannot apply a sufficient sterilizing effect to the drain water. After the above-mentioned sterilization operation (a sterilization operation performed only by an ON/OFF control of the drain pump 8) was performed, a plastic test piece was immersed into drain water W accumulated in the drain pan 6 to perform an anti-biofilm test for plastic product or the like. In such a case, a black biofilm formed on the test piece. Microorganisms in the drain water adhered to and grew on the surface of the test piece.

On the other hand, in the indoor unit 2 of the air conditioner 1 according to the embodiment, as shown in division (B) of FIG. 8, after an instruction to stop the operation in the above-mentioned operation modes (1) to (4) is issued, instead of bringing the drain pump 8 into an off state, the control unit 4 performs a control such that the drain pump 8 is brought into an off state after a period (first period) in which an output from the drain pump 8 is reduced in a stepwise manner. In the case in which the drain pump 8 is a pump driven by an AC power source, high-speed switching performed by adjusting DUTY is used. In the case in which the drain pump 8 is a pump driven by a DC power source, it is sufficient to adjust a DC voltage to be applied.

For a stepwise control of the drain pump 8, as shown in the first period in division (B) of FIG. 8, the control unit 4 reduces an output in a stepwise manner from the point at which the drain pump 8 is driven (DUTY 100%) toward the point at which the drain pump 8 is stopped (DUTY 0%). During the period in which the output from the drain pump 8 is reduced in a stepwise manner, that is, during the first period, although drain water that is present in the drain pipe disposed outside the housing 5, and drain water that is present in the drain hose 9 and the drain pump 8 disposed in the housing 5 flows back, the drain water slowly flows out from the suction port 8a of the drain pump 8 to the drain pan 6.

After the period in which the drain pump 8 is stopped (third period), the period in which the drain pump 8 is in an on state (second period) is provided again. Thereafter, the period (first period) in which an output from the drain pump 8 is reduced in a stepwise manner is provided, and then the drain pump 8 is brought into an off state. With such operations, drain water accumulated in the drain pan 6 of the air conditioner 1 is agitated to sterilize the drain pan 6.

During the first period, drain water slowly flows out from the lower portion of the drain pump 8, thus slowly passing through the irradiation region U of the sterilizing unit and hence, it is possible to effectively sterilize the drain water. Therefore, it is possible to apply a sufficient sterilizing effect with irradiation in one pass. After the sterilization operation of the present embodiment (the sterilization operation in which an output is reduced in a stepwise manner from the point at which the drain pump 8 is driven toward the point at which the drain pump 8 is stopped in step S7 and step S7') was performed, an anti-biofilm test for plastic product or the like was performed in the same manner as described above by using drain water accumulated in the drain pan 6. In such a case, a biofilm did not form on the test piece.

Although an output from the drain pump 8 is reduced in four stages in the first period in division (B) of FIG. 8, the output from the drain pump 8 is not limited to be reduced in four stages, and may be reduced in two or three stages, or may be reduced in five or more stages. Although one example of percentages of DUTY in respective stages is shown in the first periods in division (B) of FIG. 8, this is not a limitation, and arbitrary percentages of DUTY can be set. Although the same time length (30 sec for every stage) is set for the respective stages in the first period in division (B) of FIG. 8, this is not a limitation.

The description has been made with reference to FIG. 8 for the case in which when the operation in any one of the above-mentioned operation modes (1) to (4) is stopped, an output is reduced in a stepwise manner from the point at which the drain pump 8 is driven toward the point at which the drain pump 8 is stopped. However, this is not a limitation. For example, as shown in division (B) of FIG. 9, after a lapse of a predetermined period (120 sec) from the point at which the operation in any one of the above-mentioned operation modes (1) to (4) is stopped, an output may be reduced in a stepwise manner from the point at which the drain pump 8 is driven to the point at which the drain pump 8 is stopped. In such a case, by sterilizing drain water in the same manner as the first period also in the second period starting from the point at which the operation is stopped until a predetermined period elapses, a sterilizing effect on drain water is increased.

The description has been made for the case in which after the operation in any one of the above-mentioned operation modes (1) to (4) is stopped, irradiation with a sterilizing substance is performed for sterilization during the first period (that is, during the period of the output control in which an output is reduced in a stepwise manner from the point at which the drain pump 8 is driven toward the point at which the drain pump 8 is stopped). However, the period in which the sterilization is performed is not limited to such a period. The sterilizing unit 10 may perform the sterilization not only during the first period, but also during the second period and/or the third period (shown in division (B) of FIG. 9, for example), or may perform the sterilization during an operation in any one of the above-mentioned operation modes (1) to (6). The sterilization may be performed for an arbitrary set time.

As has been described above, with the indoor unit 2 of the air conditioner 1 according to the present embodiment, it is possible to ensure a contact time of the sterilizing substance with drain water that flows back due to its own weight when the drain pump 8 is in a stopped state and hence, it is possible to increase a sterilizing effect on the drain water. Further, with the indoor unit 2 of the air conditioner according to the present embodiment, it is possible to increase a sterilizing effect and hence, it becomes unnecessary to switch the operation state from a drive state to a stopped state a plurality of times in order to ensure a contact time of the sterilizing substance. Accordingly, it is possible to reduce driving sound of the drain pump 8 and sound of suctioning drain water (agitation sound) at the time of switching the operation state and hence, discomfort of the user can be suppressed to a minimum.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

1...Air Conditioner, 2...Indoor Unit, 3...Heat Exchanger, 4...Control Unit, 5...Housing, 6...Drain Pan, 7...Blower, 8...Drain Pump, 9...Drain Hose, 10...Sterilizing Unit, 11...Top Plate, 12...Side Plates, 12f...Side Plate on Front Surface, 12fr...Front Right Side Plate, 12rf...Right Front Side Plate, 13...Inclined Plate, 13a... Inclined Portion, 13b...Stepped Portion, 13fl...Front Left Inclined Plate, 13fr...Front Right Inclined Plate, 15...Support Metal Fitting, 16 and 17... Joint Portions, 19...Decorative Panel, 21...Suction Grille, 22...Air Outlet, 31...Drain Socket

## Claims

1. An indoor unit of an air conditioner, the indoor unit comprising:
a body that is attachable to a ceiling of a room to be air-conditioned;
a heat exchanger housed in the body;
a drain pan configured to accumulate drain water generated due to heat exchange performed by the heat exchanger;
a drain pump configured to pump up the drain water accumulated in the drain pan;
a drain hose configured to drain, to an outside of the body, the drain water discharged by the drain pump;
a sterilizing unit configured to sterilize the drain water; and
a control unit configured to perform an output control for the drain pump such that an output from the drain pump is reduced in a stepwise manner from a point at which the drain pump is driven toward a point at which the drain pump is stopped.

2. The indoor unit of an air conditioner according to claim 1, wherein the sterilizing unit is disposed at a position that allows the sterilizing unit to irradiate a whole or a portion of a lower region with a sterilizing substance in order to sterilize drain water in the whole or the portion of the lower region, the lower region being located below a suction port of the drain pump.

3. The indoor unit of an air conditioner according to claim 1, wherein when any one of a cooling operation mode, a dehumidification operation mode, an air-blowing and humidification operation mode, and a heating and humidification operation mode ends, the control unit performs, as the output control, a control in which an output from the drain pump is reduced in a stepwise manner from a point at which the drain pump is driven to a point at which the drain pump is stopped.

4. The indoor unit of an air conditioner according to claim 1, wherein when a predetermined time elapses in a state in which an operation of the air conditioner is stopped, the control unit performs, as the output control, a control that includes a first period and second period, the drain pump being controlled in the first period to reduce an output from the drain pump in a stepwise manner from a point at which the drain pump is driven toward a point at which the drain pump is stopped, the drain pump being driven in the second period.

5. The indoor unit of an air conditioner according to claim 4, wherein the control unit performs the output control for the drain pump such that a time length of the first period is equal to a time length of the second period.

6. The indoor unit of an air conditioner according to claim 2, wherein the control unit controls the sterilizing unit to perform irradiation with the sterilizing substance during a first period in which the drain pump is controlled to reduce an output from the drain pump in a stepwise manner from a point at which the drain pump is driven toward a point at which the drain pump is stopped.

7. The indoor unit of an air conditioner according to any one of claims 1 to 6, wherein the sterilizing unit is a device configured to irradiate the drain water accumulated in the drain pan with ultraviolet light as the sterilizing substance.
